# FASCICULE DE BREVET EUROPEEN

(11) **EP 0 648 992 B1**
(45) Date de publication et mention de la délivrance du brevet: **01.12.1999**
(21) Numéro de dépôt: 94402274.8
(22) Date de dépôt: 11.10.1994
(51) Int. Cl.: F26B 21/10, G05D 22/02

(54) **Procédé de séchage de produits et dispositif de régulation de la température de l'air de séchage dans une machine de séchage**
Verfahren zur Trocknung von Produkten und Vorrichtung zur Steuerung der Heisslufttemperatur in einer Trocknungsmaschine
Process for drying products and hot air temperature controlling device in a drying machine

(30) Priorité: 13.10.1993 FR 9312182
(43) Date de publication de la demande: 19.04.1995
(73) Titulaire: ESSWEIN S.A., F-85002 La Roche-sur-Yon (FR)
(72) Inventeur: Chabanne, Pascal, F-92402 Courbevoie Cedex (FR); Clement, Jean-Francis, F-92402 Courbevoie Cedex (FR); Couillaud, Philippe, F-92402 Courbevoie Cedex (FR); Geay, Jean-Claude, F-92402 Courbevoie Cedex (FR); Remeur, Daniel, F-92402 Courbevoie Cedex (FR)
(74) Mandataire: Chaverneff, Vladimir

(56) Documents cités:
- EP-A- 0 479 204
- DE-A- 3 916 889
- FR-A- 2 632 986
- GB-A- 2 034 451
- US-A- 3 986 269
- US-A- 4 043 050

## Description

La présente invention se rapporte à un procédé de séchage de produits à l'aide d'un courant d'air chaud ainsi qu'à un dispositif de régulation de la température de chauffage d'air de séchage d'une machine de séchage de produits telle qu'une machine lavante-séchante ou séchante, telle qu'un lave-linge ou un lave-vaisselle.

Dans une machine lavante-séchante ou dans un sèche-linge, on utilise pour le séchage un flux d'air chaud que l'on dirige vers la charge de linge à sécher pour charger ce flux d'air en humidité. On déshumidifie ensuite ce flux d'air en le faisant passer dans un condenseur, pour le réinjecter sur le linge en l'ayant préalablement réchauffé en contact d'éléments chauffants.

Dans la plupart des machines actuellement fabriquées, on utilise, pour réguler la température du flux d'air chaud, un thermostat bimétallique relié directement en série avec les éléments chauffants. Ce thermostat a une hystérésis d'environ ±5° autour d'une température de déclenchement nominale, ce qui engendre de fortes variations de température de l'air chauffé à cause de la faible vitesse de réaction de ce thermostat. Pour éviter de telles variations, on ajoute généralement d'autres thermostats susceptibles de réagir en cas de conditions initiales défavorables (linge trop sec, condenseur défaillant, surtensions,...) avant que la température de l'air de séchage n'atteigne, en n'importe quel endroit du circuit, une valeur trop élevée. Ces thermostats sont onéreux, et sont souvent difficiles à implanter. De tels procédés de séchage sont par exemple connus d'après les documents US-A-3 986 269, US-A-4 043 050 et EP-A-0 479 204.

La présente invention a pour objet un dispositif de régulation de la température de chauffage d'air de séchage d'une machine lavante-séchante ou d'un sèche-linge qui ne permette pas à l'air de séchage d'atteindre une température trop élevée, quelles que soient les conditions initiales et de fonctionnement de la machine, sans en augmenter sensiblement le coût ni en compliquer la fabrication, et qui optimise la dépense en énergie nécessaire au séchage.

Le dispositif de régulation conforme à l'invention est défini en revendication 11. Il comporte au moins un capteur de température du type à thermistance, disposé dans le circuit d'air de séchage de la machine, ce capteur étant relié à un circuit de régulation de la puissance de chauffage du dispositif de chauffage d'air, ce dispositif de régulation étant lui-même relié à l'entrée de commande d'un dispositif d'alimentation variable en énergie électrique alimentant un dispositif de chauffage de l'air de séchage, et il est caractérisé en ce que le dispositif de régulation comporte des moyens de calcul de températures moyennes et de calcul de différences entre températures moyennes successives, et des moyens de détermination du gradient de température de l'air de séchage, et en ce que le dispositif de régulation régule, depuis le début du séchage, la quantité d'énergie envoyée au dispositif de chauffage en fonction directe de l'écart entre la température mesurée et une valeur de consigne, et en fonction inverse du gradient de température de l'air de séchage. Selon une caractéristique avantageuse de l'invention, on dispose au moins un capteur de température supplémentaire à un endroit différent du circuit pour mesurer les gradients de température et corréler cette mesure avec le degré de siccité du linge.

Le procédé de séchage d'air conforme à l'invention est défini en revendication 1. Il est caractérisé en ce que l'on mesure périodiquement la température de ce courant d'air depuis le début du séchage en au moins un point du circuit d'air,que l'on en déduit le gradient de température de cet air, et que l'on régule la quantité d'énergie envoyée au circuit de chauffage d'air en fonction directe de l'écart entre la température mesurée et une valeur de consigne, et en fonction inverse du gradient de température de l'air de séchage.

La présente invention sera mieux comprise à la lecture de la description détaillée d'un mode de réalisation, pris à titre d'exemple non limitatif, et illustré par le dessin annexé, sur lequel :
- la figure 1 est un diagramme montrant l'évolution de la température de l'air de séchage avec un dispositif de régulation de l'art antérieur et avec un dispositif de régulation conforme à l'invention ;
- la figure 2 est un bloc-diagramme d'un dispositif de régulation conforme à l'invention.

L'invention est décrite ci-dessous en référence à une machine à laver le linge, du type lavante-séchante, mais il est bien entendu qu'elle peut s'appliquer à des machines similaires utilisant un flux d'air chaud pour sécher des produits humides, telles que des sèche-linge, des lave-vaisselle séchants, des appareils de séchage industriels...

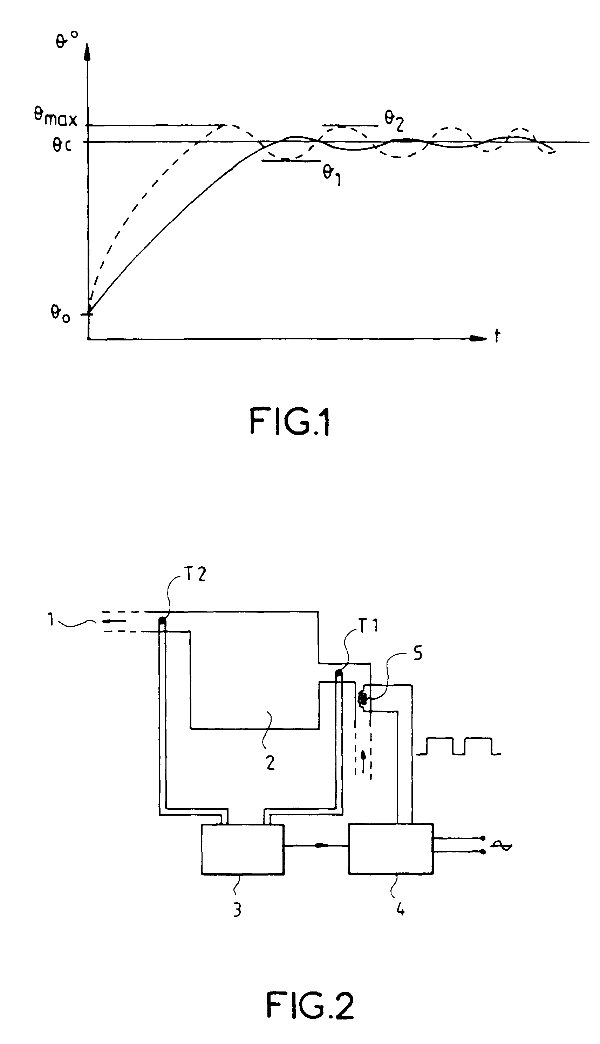

Dans une machine séchante classique, la température de l'air de séchage chauffé passe sensiblement exponentiellement d'une valeur θₒ (température ambiante) à une valeur maximale θₘₐₓ déterminée par le réglage d'un thermostat (de type bilame), puis descend jusqu'à une valeur θ₁ déterminée par l'hystérésis du thermostat, la différence (θₘₐₓ - θ₁) pouvant être de 10°C ou plus. Ensuite, le thermostat ayant rétabli le chauffage, la température de l'air remonte jusqu'à une température θ₂, inférieure à θₘₐₓ du fait d'une température de départ (θ₁) nettement supérieure à θₒ, donc d'un gradient de température plus fort, et par conséquent d'une coupure plus rapide du thermostat. Ensuite, les températures de coupure et de réenclenchement du thermostat se rapprochent légèrement les unes des autres, et se stabilisent (courbe en trait interrompu sur la figure 1).

Par contre, grâce au dispositif de l'invention, la régulation de température est beaucoup plus précise et tient compte du gradient de montée en température. Comme représenté en trait continu sur la figure 1, la montée en température est moins rapide qu'avec un thermostat, car le dispositif de l'invention commence à couper l'alimentation de chauffage avant la valeur de consigne θ_{c} en faisant évoluer progressivement le rapport cyclique de l'alimentation à découpage (décrite ci-dessous) alimentant le dispositif de chauffage, ce rapport cyclique évoluant en fonction inverse du gradient de montée en température. Ceci a pour effet que la température de l'air chauffé dépasse à peine la valeur de consigne θ_{c} (dépassement principalement dû à l'inertie thermique des éléments chauffants plutôt qu'à une hystérésis du système de régulation de température). Ensuite, la valeur de la température fluctue légèrement autour de la valeur de consigne θ_{c}, principalement à cause de l'inertie thermique des éléments chauffants plutôt qu'à cause d'une hystérésis du dispositif de régulation, puisque, comme on le verra ci-dessous, la précision du dispositif de régulation dépend essentiellement de la fréquence de répétition des comparaisons successives de variations de température, la thermistance pouvant être du type à très grande précision.

La montée en température étant moins rapide avec le dispositif de l'invention que dans le cas des dispositifs à thermostat (sans toutefois nuire à l'efficacité du séchage) , et ne donnant pratiquement pas lieu à dépassement de la valeur de consigne θ_{c,,} , on économise une certaine quantité d'énergie (proportionnelle à la somme algébrique des surfaces comprises entre la courbe du dispositif de l'invention et la courbe des dispositifs connus) qui peut être d'environ 5%.

On a représenté en figure 2 le bloc-diagramme simplifié du dispositif de régulation conforme à l'invention. Ce dispositif comporte essentiellement deux thermistances T1 et T2 disposées dans le circuit 1 de circulation d'air chaud d'une machine séchante, respectivement en amont et en aval de la cuve de séchage 2. Les deux thermistances T1 et T2 sont reliées à un circuit 3 de régulation connu en soi et commandant un dispositif 4 d'alimentation d'une ou de plusieurs résistances 5 de chauffage d'air disposées dans le circuit 1. Le circuit d'alimentation 4 est du type à découpage à rapport cyclique et/ou à fréquence variable, et le circuit 3 est du type à régulation proportionnelle et dérivée ou bien proportionnelle intégrale-dérivée, ou bien simplement proportionnelle, ou bien encore en logique floue. Le circuit 3 agit sur le rapport cyclique des signaux rectangulaires (ou d'une autre forme, par exemple dans le cas de la commande par triac) délivrés par le circuit 4.

Le circuit 3 réalise une mesure toutes les T secondes, avec T pouvant être compris entre 30 et 300 environ, par exemple (ou moins de 30 secondes dans le cas d'une commande par triac). Dans le cas de mesures effectuées avec une seule thermistance, le circuit 3 calcule à chaque fois la température moyenne entre deux mesures successives et calcule la différence entre les températures moyennes successives. Il en déduit le gradient de la température de l'air de séchage. D'autre part, le circuit 3 connaît la température de consigne, qui est fixée par l'utilisateur. (ou qui est préréglée). A partir de ces valeurs, le circuit 3 agit via le circuit 4 sur la quantité d'énergie envoyée au circuit de chauffage 5 (en faisant varier le rapport cyclique et/ou la fréquence de la tension alimentant les résistances 5), cette quantité d'énergie étant une fonction directe de l'écart entre la température de consigne et la température mesurée. Ainsi, au départ (à la température ambiante), le gradient de température est assez élevé (mais cependant moins élevé que dans le cas de l'art antérieur -voir la courbe en trait interrompu en figure 1- pour lequel l'énergie fournie aux résistances 5 est constante et non limitée). Au fur et à mesure de l'augmentation de la température, l'énergie d'alimentation des résistances 5 diminue, ce qui fait que le gradient de température diminue, et la température de consigne est atteinte lentement, et donc à peine dépassée, puisque l'énergie fournie aux résistances chauffantes est très faible lorsque la température mesurée est proche de la valeur de consigne.

Dans le cas de la mesure de température à l'aide de deux thermistances (ou plus) dont l'une (T1) est disposée en amont de la cuve de séchage, et l'autre (T2) en aval, le circuit 3 tient compte des mesures effectuées avec ces deux thermistances. La variation de ces mesures permet d'évaluer le degré de siccité du linge. Si le linge est très humide, ces deux mesures sont nettement différentes, puisque le linge humide absorbe une grande quantité d'énergie calorifique. Le circuit 3 peut alors augmenter la température de consigne afin de diminuer le temps de séchage (le linge humide supporte une température de séchage plus élevée que le linge sec). Au fur et à mesure de la dessiccation du linge, les températures amont et aval évoluent de façon telle que le circuit 3 peut alors soit diminuer la température de consigne, soit réduire la durée du séchage.

Ainsi, grâce à l'invention, on obtient un fonctionnement optimal du dispositif de séchage, même lorsque ce fonctionnement se rapproche des limites admises: linge trop humide ou trop sec, condenseur défaillant, surtension du réseau d'alimentation électrique, éléments chauffants dont les valeurs sont à la limite des tolérances, quantité de linge mal adaptée, textiles fragiles,... On régule la température depuis le début du séchage, ce qui permet d'éviter de dépasser nettement la consigne et donc de dépenser inutilement de l'énergie, d'éviter les températures trop élevées pour le linge, et d'éviter de surdimensionner les matériaux constituant en particulier le circuit de séchage (ils n'ont plus besoin de résister à des températures élevées). On peut même faire varier cette température de consigne suivant le degré d'humidité du linge, ce qui, non seulement économise de l'énergie, mais évite d'abîmer le linge lorsqu'il est presque sec.

On peut également disposer une ou plusieurs thermistances dans l'eau de lavage du linge (pour une machine lavante ou lavante-séchante) pour réguler de manière similaire la température de l'eau de lavage et/ou pour obtenir un paramètre supplémentaire servant au dispositif de régulation 3.

## Revendications

1. Procédé de séchage de produits à l'aide d'un courant d'air chaud , caractérisé par le fait que l'on mesure périodiquement la température de ce courant d'air depuis le début du séchage en au moins un point du circuit d'air,que l'on en déduit le gradient de température de cet air, et que l'on régule la quantité d'énergie envoyée au circuit de chauffage d'air en fonction directe de l'écart entre la température mesurée et une valeur de consigne, et en fonction inverse du gradient de température de l'air de séchage.

2. Procédé selon la revendication 1, caractérisé par le fait que la régulation est du type proportionnel-dérivée.

3. Procédé selon la revendication 1, caractérisé par le fait que la régulation est du type proportionnel-intégrale-dérivée.

4. Procédé selon la revendication 1, caractérisé par le fait que la régulation est du type proportionnel.

5. Procédé selon la revendication 1, caractérisé par le fait que la régulation est du type à logique floue.

6. Procédé selon l'une des revendications précédentes, caractérisé par le fait que l'on agit sur le gradient en faisant varier la quantité d'énergie envoyée au dispositif de chauffage d'air de séchage.

7. Procédé selon la revendication 6, caractérisé par le fait que le dispositif de chauffage est alimenté par une tension dont on fait varier le rapport cyclique et/ou la fréquence.

8. Procédé selon l'une des revendications précédentes, caractérisé par le fait que la mesure de la température du courant d'air de séchage est effectuée périodiquement, et que l'on prend comme valeur mesurée la valeur moyenne à chaque période de mesure.

9. Procédé selon l'une des revendications précédentes, caractérisé par le fait que l'on mesure la température de l'air de séchage en amont et en aval des produits à sécher.

10. Procédé selon les revendications 7 et 9, caractérisé par le fait que l'on fait varier la valeur de la température de consigne en fonction de l'écart entre les mesures amont et aval.

11. Dispositif de régulation de la température de chauffage d'air de séchage dans une machine de séchage de produits comportant une enceinte (2) contenant les produits à sécher et dans laquelle on fait passer l'air de séchage, et comportant au moins un capteur de température de précision (T1, T2) relié au dispositif de régulation (3) lui-même relié à l'entrée de commande d'un dispositif (4) d'alimentation variable en énergie électrique alimentant un dispositif (5) de chauffage de l'air de séchage, caractérisé en ce que le dispositif de régulation comporte des moyens de calcul de températures moyennes et de calcul de différences entre températures moyennes successives, et des moyens de détermination du gradient de température de l'air de séchage, et en ce que le dispositif de régulation régule, depuis le début du séchage, la quantité d'énergie envoyée au dispositif de chauffage en fonction directe de l'écart entre la température mesurée et une valeur de consigne, et en fonction inverse du gradient de température de l'air de séchage.

12. Dispositif selon la revendication 11, caractérisé par le fait que le capteur de température est une thermistance.

13. Dispositif selon la revendication 11 ou 12, caractérisé par le fait que le dispositif de régulation est du type proportionnel-dérivé.

14. Dispositif selon la revendication 11 ou 12, caractérisé par le fait que le dispositif de régulation est du type proportionnel-intégrale-dérivée.

15. Dispositif selon la revendication 11 ou 12, caractérisé par le fait que le dispositif de régulation est du type proportionnel.

16. Dispositif selon la revendication 11 ou 12, caractérisé par le fait que le dispositif de régulation est du type à logique floue.

17. Dispositif selon l'une des revendications 11 à 16, caractérisé par le fait que le dispositif d'alimentation en énergie est du type à découpage.

18. Dispositif selon l'une des revendications 11 à 17, caractérisé par le fait qu'il comporte au moins un capteur de température de précision (T₁) en amont de l'enceinte et au moins un autre capteur (T₂) en aval de l'enceinte.

19. Machine pour le linge ou la vaisselle, du type lavante-séchante ou séchante, caractérisée par le fait qu'elle comporte un dispositif de régulation selon l'une des revendications 11 à 18.

20. Procédé selon l'une des revendications 1 à 10, caractérisé par le fait qu'il est appliqué au séchage de linge ou de la vaisselle.

## Claims

1. Method for drying articles with the help of a hot air current, characterised by periodically measuring the temperature of said air current from the start of the drying process at at least one point of the air current, by deducing therefrom the temperature gradient of said air, and by regulating the quantity of energy sent to the air heating circuit as a direct function of the difference between the measured temperature and a reference value, and as an inverse function of the temperature gradient of the drying air.

2. Method according to claim 1, characterised by the fact that the regulation is of the proportional/derivative type.

3. Method according to claim 1, characterised by the fact that the regulation is of the proportional/integral/derivative type.

4. Method according to claim 1, characterised by the fact that the regulation is of the proportional type.

5. Method according to claim 1, characterised by the fact that the regulation is of the fuzzy logic type.

6. Method according to any of the preceding claims, characterised by acting upon the gradient by varying the quantity of energy sent to the drying air heating device.

7. Method according to claim 6, characterised by the fact that the heating device is supplied with a voltage whose cyclic ratio and/or frequency is varied.

8. Method according to any of the preceding claims, characterised by the fact that the measurement of the drying air current temperature is performed periodically, and that the measured value is taken to be the mean value at each measurement period.

9. Method according to any of the preceding claims, characterised in that the drying air temperature is measured upstream and downstream of the articles to be dried.

10. Method according to claims 7 and 9, characterised by by varying the value of the reference temperature as a function of the difference between the upstream and downstream measurements.

11. Device for regulating the drying air heating temperature in a machine for drying articles, having an enclosure (2) containing the articles to be dried and into which the drying air is passed, and having at least one precision temperature sensor (T1, T2) connected to the regulating device (3), which in turn is connected to the control input of a device (4) for providing a variable power supply to a device (5) for heating the drying air, characterised in that the regulating device has means for computing mean temperatures and for computing differences between successive mean temperatures, and means for determining the temperature gradient of the drying air, and in that the regulating device regulates, from the start of the drying process, the quantity of energy sent to the heating device as a direct function of the difference between the measured temperature and a reference value, and as an inverse function of the temperature gradient of the drying air.

12. Device according to claim 11, characterised by the fact that the temperature sensor is a thermistor.

13. Device according to claim 11 or 12, characterised by the fact that the regulating device is of the proportional/derivative type.

14. Device according to claim 11 or 12, characterised by the fact that the regulating device is of the proportional/integral/derivative type.

15. Device according to claim 11 or 12, characterised by the fact that the regulating device is of the proportional type.

16. Device according to claim 11 or 12, characterised by the fact that the regulating device is of the fuzzy logic type.

17. Device according to any of claims 11 to 16, characterised by the fact that the power supply device is of the time-division type.

18. Device according to any of claims 11 to 17, characterised by the fact that it includes at least one precision temperature sensor (T1) upstream of the enclosure and at least one other sensor (T2) downstream of the enclosure.

19. Machine for laundry or tableware, of the washer-drier or drier type, characterised by the fact that it includes a regulating device according to one of claims 11 to 18.

20. Method according to any of claims 1 to 10, characterised by the fact that it is used for drying laundry or tableware.

## Patentansprüche

1. Verfahren zum Trocknen von Produkten mithilfe eines heißen Luftstroms, dadurch gekennzeichnet, daß man die Temperatur dieses Luftstroms von Beginn des Trocknungsvorgangs an periodisch an mindestens einem Punkt des Luft-Kreislaufs mißt, daß man daraus den Temperaturgradienten dieser Luft ableitet und die an die Schaltung zur Aufheizung der Luft gelieferte Energiemenge gemäß einer direkten Funktion der Differenz zwischen der gemessenen Temperatur und einem Sollwert sowie gemäß einer inversen Funktion des Temperaturgradienten der Trocknungsluft regelt.

2. Verfahren nach Anspruch 1, dadurch gekennzeichnet, daß die Regelung eine Proportional-Differentialregelung ist.

3. Verfahren nach Anspruch 1, dadurch gekennzeichnet, daß die Regelung eine Proportional-Integral-Differentialregelung ist.

4. Verfahren nach Anspruch 1, dadurch gekennzeichnet, daß die Regelung eine Proportionalregelung ist.

5. Verfahren nach Anspruch 1, dadurch gekennzeichnet, daß die Regelung vom Typ einer unscharfen Logik ist.

6. Verfahren nach einem der vorstehenden Ansprüche, dadurch gekennzeichnet, daß man auf den Gradienten einwirkt, indem man die Energiemenge variiert, die man an die Vorrichtung zum Aufheizen der Trocknungsluft liefert.

7. Verfahren nach Anspruch 6, dadurch gekennzeichnet, daß die Heizvorrichtung von einer Spannung gespeist wird, deren zyklisches Schaltverhältnis und/oder deren Frequenz geändert wird.

8. Verfahren nach einem der vorstehenden Ansprüche, dadurch gekennzeichnet, daß man die Temperatur des Luftstroms zum Trocknen periodisch mißt und als Meßwert den Mittelwert jeder Meßperiode nimmt.

9. Verfahren nach einem der vorstehenden Ansprüche, dadurch gekennzeichnet, daß man die Temperatur der Trocknungsluft vor und hinter den zu trocknenden Produkten mißt.

10. Verfahren nach den Ansprüchen 7 und 9, dadurch gekennzeichnet, daß man den Wert der Solltemperatur abhängig von der Differenz zwischen den Meßwerten vor und hinter den zu trocknenden Produkten variiert.

11. Vorrichtung zur Regelung der Heiztemperatur für die Trocknungsluft in einer Maschine zum Trocknen von Produkten, mit einem Behälter (2), der die zu trocknenden Produkte enthält und durch den man die Trocknungsluft leitet, und mit mindestens einer genauen Temperaturmeßsonde (T1, T2), die an die Regelvorrichtung (3) angeschlossen ist, welche ihrerseits mit dem Steuereingang einer Vorrichtung (4) zur variablen Energiezufuhr zu einer Vorrichtung (5) zur Aufheizung der Trocknungsluft verbunden ist, dadurch gekennzeichnet, daß die Regelvorrichtung Mittel zur Berechnung von Temperatur-Mittelwerten und von Differenzen zwischen aufeinanderfolgenden Temperatur-Mittelwerten sowie Mittel zur Bestimmung des Temperaturgradienten der Trocknungsluft aufweist und daß die Regelvorrichtung von Beginn des Trocknungsvorgangs an die an die Heizvorrichtung gelieferte Energiemenge gemäß einer direkten Funktion der Differenz zwischen der gemessenen Temperatur und einem Sollwert sowie gemäß einer inversen Funktion des Temperaturgradienten der Trocknungsluft regelt.

12. Vorrichtung nach Anspruch 11, dadurch gekennzeichnet, daß die Temperaturmeßsonde ein Thermistor ist.

13. Vorrichtung nach Anspruch 11 oder 12, dadurch gekennzeichnet, daß die Regelvorrichtung eine Proportional-Differentialregelvorrichtung ist.

14. Vorrichtung nach Anspruch 11 oder 12, dadurch gekennzeichnet, daß die Regelvorrichtung eine Proportional-Integral-Differentialregelvorrichtung ist.

15. Vorrichtung nach Anspruch 11 oder 12, dadurch gekennzeichnet, daß die Regelvorrichtung eine Proportionalregelvorrichtung ist.

16. Vorrichtung nach Anspruch 11 oder 12, dadurch gekennzeichnet, daß die Regelvorrichtung vom Typ mit unscharfer Logik ist.

17. Vorrichtung nach einem der Ansprüche 11 bis 16, dadurch gekennzeichnet, daß die Vorrichtung zur Energiezufuhr vom Zerhackertyp ist.

18. Vorrichtung nach einem der Ansprüche 11 bis 17, dadurch gekennzeichnet, daß sie mindestens eine genaue Temperaturmeßsonde (T1) vor dem Behälter und mindestens eine weitere Sonde (T2) hinter dem Behälter besitzt.

19. Waschmaschine oder Geschirrspüler vom Wasch-Trockentyp oder nur vom Trockentyp, dadurch gekennzeichnet, daß sie eine Regelvorrichtung nach einem der Ansprüche 11 bis 18 enthält.

20. Verfahren nach einem der Ansprüche 1 bis 10, dadurch gekennzeichnet, daß es auf die Trocknung von Wäsche oder von Geschirr angewendet wird.
